# EUROPÄISCHE PATENTSCHRIFT

(11) **EP 0 777 957 B1**
(45) Veröffentlichungstag und Bekanntmachung des Hinweises auf die Patenterteilung: **16.08.2001**
(21) Anmeldenummer: 96119330.7
(22) Anmeldetag: 03.12.1996
(51) Int. Cl.: A01D 34/66

(54) **Kreiselmäher**
Rotary mowers
Rotofaucheuses à tambour

(30) Priorität: 08.12.1995 DE 29519503 U
(43) Veröffentlichungstag der Anmeldung: 11.06.1997
(73) Patentinhaber: NIEMEYER Landmaschinen GmbH, 48477 Hörstel-Riesenbeck (DE)
(72) Erfinder: Niemeyer, Reinhard, Dr., 48477 Hörstel (DE); Ungruh, Josef, 48429 Rheine (DE)

(56) Entgegenhaltungen:
- EP-A- 0 256 574
- DE-A- 1 582 338
- DE-A- 1 582 355
- DE-A- 4 008 321
- FR-A- 2 690 604
- US-A- 2 682 740

## Beschreibung

Die Erfindung betrifft einen Kreiselmäher, insbesondere Trommelmäher, gemäß dem Oberbegriff des Anspruchs 1. Ein derartiger Kreiselmäher ist bereits aus DE-A-1 582 338 bekannt.

Aus der DE 40 08 321 A1 ist ein Trommelmähwerk bekannt, bei dem die Montage der Mähtrommeln vereinfacht werden soll. Die Montage jeder Mähtrommel erfolgt durch Öffnungen im Mähwerksquerträger. Die vormontierten Mähtrommeln mit dem Abtriebszahnrad werden durch die Antriebsöffnung mit dem Antriebszahnrad verbunden und durch Schrauben am Mähwerksquerträger befestigt. Die Endmontage des Antriebs ist schwierig, zeitaufwendig und ungenau.

Aufgabe der Erfindung ist es, einen modular aufgebauten Kreiselmäher, insbesondere Trommelmäher für den Frontanbau an Traktoren mit besonders einfacher Bauweise zu schaffen, die eine leichte Anpassung an die jeweiligen Erfordernisse ermöglicht.

Die Erfindung löst die Aufgabe mit den Merkmalen des kennzeichnenden Teils des Anspruchs 1. Hinsichtlich weiterer wesentlicher Ausgestaltungen der Erfindung wird auf die Ansprüche 2 bis 7 verwiesen.

Nach der Erfindung besteht der Kreiselmäher u.a. in vorteilhafter Weise aus einzelnen Modulen, die im wesentlichen aus den einzelnen Mähtrommeln mit ihrem Antrieb besteht. Diese Module sind vormontiert und bilden eine in sich abgeschlossene Einheit. Der Träger dieser Module bildet die Verbindung zum Maschinengestell. Er besteht nach der Erfindung aus mindestens zwei sich parallel im Abstand zueinander erstreckenden geformten Trägerteilen, die vorzugsweise Z-förmig geformt sind. Sie sind untereinander durch Bestandteile der Module, vorzugsweise Getriebe, verbunden und baukastenmäßig zwischen die Trägerteile zwischengesetzt. Jedes Trägerteil ist in der Länge einteilig ausgebildet, um möglichst wenig kostenintensive Schnittstellen zu haben.

Durch diese vorteilhafte Ausgestaltung der Erfindung besteht beispielsweise die Möglichkeit, das Antriebsgetriebe der einzelnen Module einheitlich zu gestalten, damit diese für alle vorkommenden Mähtrommelgrößen verwendbar sind. Dies ist für eine kostengünstige Fertigung und Logistik von besonderem Vorteil.

Der die Module tragende Träger besteht nach der Erfindung vorzugsweise aus zwei Z-förmig geformten Trägerteilen. Die Trägerteile werden über Teile der Module bildende Getriebe durch Schraubverbindungen verbunden. Vorteilhaft ist hier, daß in den Trägerteilen in horizontaler Richtung verschiedene Befestigungsmöglichkeiten vorgesehen sind, um Module mit Mähtrommeln verschiedenen Durchmessers zueinander baukastenmäßig zu kombinieren.

Die Trägerteile können erfindungsgemäß durch zusätzliche, vorzugsweise Schraubverbindungen, örtliche Versteifungen erfahren. Da auf Schweißverbindungen weitestgehend verzichtet wird, wird die Dauerbruchgefahr im Bereich der Schweißkerben verhindert, was bei den hochtourig laufenden Mähtrommeln und den damit verbundenen Schwingungen zur Erhöhung der Lebensdauer der Maschine beiträgt.

Ein weiterer Vorteil der derartig ausgestalteten Module ist, daß die Drehrichtung der Mähteller der Mähtrommeln auf einfache Weise gewählt werden kann, indem das quer zur Fahrtrichtung symmetrische Getriebegehäuse des Moduls einfach um 180° gedreht befestigt wird. So können beispielsweise bei einem Trommelmäher mit vier Modulen als Mähtrommeln jeweils zwei paarweise in eine Drehrichtung montiert werden, um einen Mittelschwad zu bilden oder jeweils zwei gegenläufig um zwei kleinere Schwaden zu erzeugen. Dies kann auch nachträglich auf einfache Weise erfolgen.

Besonders einfach ist der Antrieb der einzelnen Module vom Hauptantriebsgetriebe aus und untereinander. Es werden geschützt zwischen den Trägerteilen angeordnete Verbindungsgelenkwellen verwendet, die die einzelnen Getriebe der Module miteinander verbinden. Hier wirkt sich besonders vorteilhaft aus, daß Fertigungsungenauigkeiten zwischen den Modulen vollkommen ausgeglichen werden, was zu einer hohen Lebensdauer des Trommelmähers beiträgt. Hierzu sind die Getriebe der Module mit zwei parallel zu den Trägerteilen ausgerichteten einander entgegengesetzt angeordneten Antriebsstummel ausgerüstet.

Die äußersten Antriebsstummel der Getriebe der Module können nach der Erfindung beispielsweise zum Antrieb eines dem Trommelmäher nachfolgenden Knickzetters oder ähnlichem Verwendung finden. Wird dies nicht gewünscht, werden die Getriebeteile an ihren Enden aus Sicherheitsgründen durch Deckel oder ähnliches verschlossen.

Zu den sicherheitstechnischen Vorteilen trägt auch der geringe Abstand im oberen Bereich der einander gegenüberliegenden Trägerteile bei, da die bewegten Teile so von oben nicht erreichbar sind.

Durch das Entfallen der Schweißungen am Träger kann die Fertigung wesentlich vereinfacht und die Lebensdauer durch bessere Übertragung der Schwingungen erhöht werden.

Weitere Merkmale und Vorteile der Erfindung ergeben sich aus der nachfolgenden Beschreibung und den Zeichnungen, in denen ein Ausführungsbeispiel eines Trommelmähers nach der Erfindung schematisch, angenähert maßstäblich dargestellt ist.

Es zeigt:
- Fig. 1 -: Ein Trommelmäher zum Frontanbau an einen Traktor in Arbeitsstellung in einer Ansicht entgegen der Fahrtrichtung.
- Fig. 2 -: Den Trommelmäher gemäß Fig. 1 in einer Draufsicht.
- Fig. 3 -: Den Trommelmäher gemäß Fig. 1 in einer Seitenansicht.
- Fig. 4-: Schnitt A-A gemäß Fig. 1 in einer vergrößerten Darstellung.

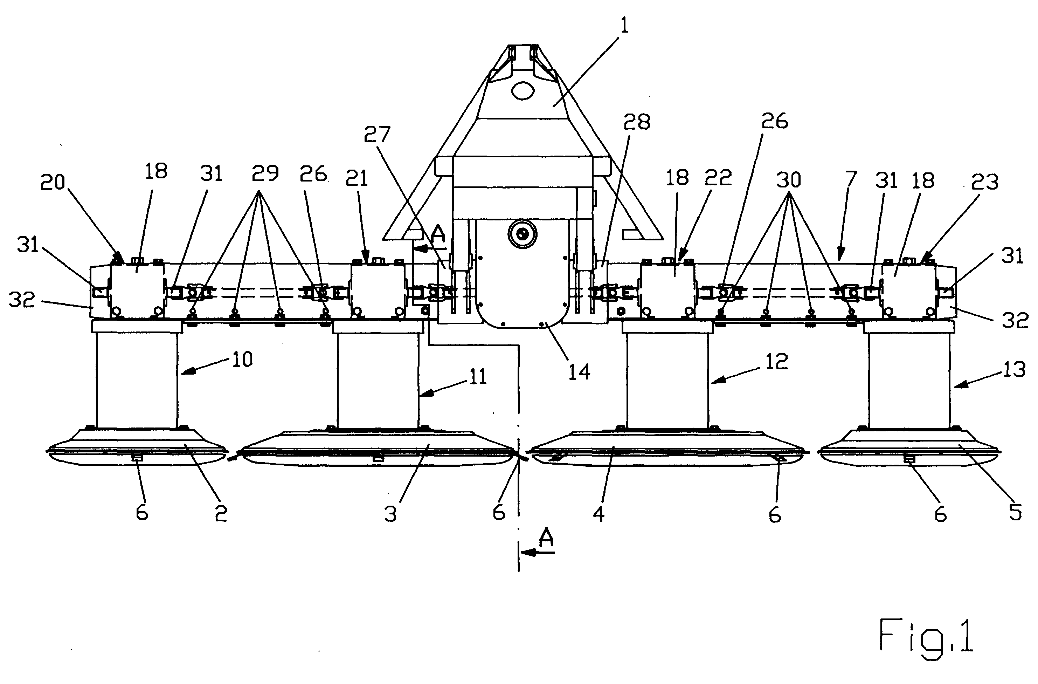

Das in den Figuren 1 bis 4 dargestellte Ausführungsbeispiel nach der Erfindung zeigt einen Front-Trommelmäher. Auf die Darstellung von für die Erfindung unwesentlichen Details ist verzichtet worden.

In Fig. 1 ist ein Front-Trommelmäher mit vier Mähtrommeln (2,3,4,5) in Arbeitsstellung entgegen der Fahrtrichtung (F) dargestellt. Jede Mähtrommel (2,3,4,5) ist mit mehreren Schneidmessern (6) bestückt und wird rotierend angetrieben. Mähtrommeln (2,3,4,5) mit Schneidmessern (6), Antrieb, Getriebe (18) und Modulteilen (20,21,22,23) bilden jeweils ein Modul (10,11,12,13). Beispielsweise Modul (10) mit den genannten Teilen bildet eine bauliche Einheit und kann komplett montiert werden. Nach dem Ausführungsbeispiel haben die Module (10,13) den gleichen Mähtrommeldurchmesser, während die Module (11,12) gegenüber den Modulen (10,13) einen größeren Mähtrommeldurchmesser und damit auch eine größere Arbeitsbreite haben. Bei Front-Trommelmähem ist es von Vorteil, wenn bei der Arbeit die Module (10,11) und Module (12,13) jeweils gleichsinnig rotierend angetrieben werden, um einen großen Mittelschwad zu bilden, der zwischen den Traktorrädern überfahren, jedoch nicht berührt wird. Um die Übergabe des Mähgutes von den äußeren Modulen (10,13) zu den inneren Modulen (11,12) zu verbessern, können zwischen den Modulen in den Hohlräumen zwischen den Trommeln Überleitorgane angeordnet werden, auf deren Darstellung verzichtet worden ist.

Ein Träger (7) mit den Trägerteilen (8,9) nimmt die Module (10,11,12,13) auf, indem die Modulteile (20,21,22,23) zwischen die Trägerteile (8,9) montiert werden. Für die Module (10,11,12,13) mit unterschiedlichen Arbeitsbreiten sind in den Trägerteilen (8,9) horizontal angeordnete Lochreihen (29,30) vorgesehen, um die unterschiedlichen Module (10,11,12,13) baukastenmäßig mit dem Träger (7) verbinden zu können. Die Verbindung zwischen den Modulteilen (20,21, 22,23) und den Trägerteilen (8,9) sind Schraubverbindungen, um auch nachträglich jederzeit einzelne Module auswechseln oder die Drehrichtung verändern zu können.

Die Verbindung zwischen dem Träger (7) und dem Maschinenrahmen (1) erfolgt über Verbindungsteile (27,28), die ebenfalls vorzugsweise geschraubt sind. Zur optimalen Bodenanpassung während der Arbeit tragen Parallelogramme (17) bei, die die Bewegung zwischen Traktor und Front-Trommelmäher ausgleichen. Bei dem Ausführungsbeispiel ist am Maschinenrahmen ein Schnellkuppler für die Verbindung zum Front-Dreipunktgestänge des nicht dargstellten Traktors vorgesehen.

Zur Verstärkung des Trägers (7) sind nach der Erfindung Verstärkungen (24,25) an die Trägerteile (8,9) angeschraubt, um die Steifigkeit des Trägers (7) zu erhöhen.

Der Antrieb der Module (10,11,12,13) erfolgt über Getriebe (18), die durch Gelenkwellen (26) miteinander und mit dem Antriebsgetriebe (14) verbunden sind. Jedes Getriebe (18) hat zwei Antriebsstummel (31), die parallel zum Träger (7) angeordnet sind. Durch die symmetrische Anordnung der Antriebsstummel (31) des Getriebes (18) und der Modulteile (20,21,22,23) ist es möglich, diese jeweils wahlweise in zwei um 180° versetzte Stellungen zu montieren. Hierdurch kann die Drehrichtung der Mähtrommeln (2,3,4,5) gewählt werden.

Der Träger (7) mit den äußeren Antriebsstummeln (31) ist aus sicherheitstechnischen Gründen durch Deckel (32) verschlossen, wenn diese nicht benutzt werden.

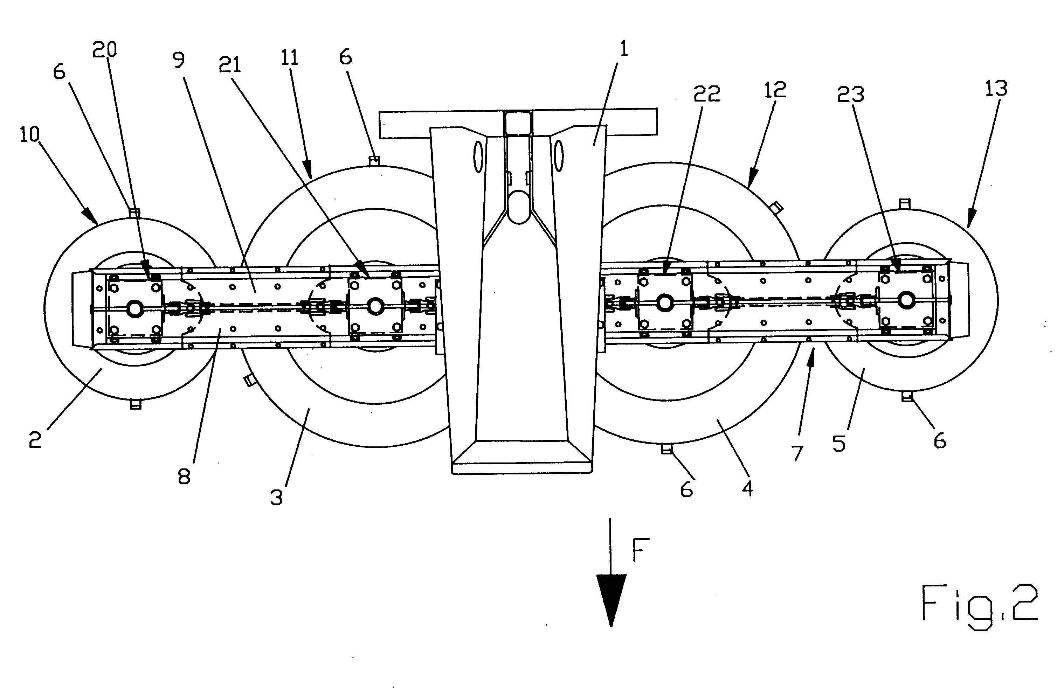

In Fig. 2 ist der Trommelmäher nach dem Ausführungsbeispiel in einer Draufsicht dargestellt. Die vertikalen Mittelachsen der Module (10,11,12,13) liegen in einer Ebene quer zur Fahrtrichtung (F). Die Z-förmigen Trägerteile (8,9) liegen im oberen Bereich einander im geringen Abstand gegenüber.

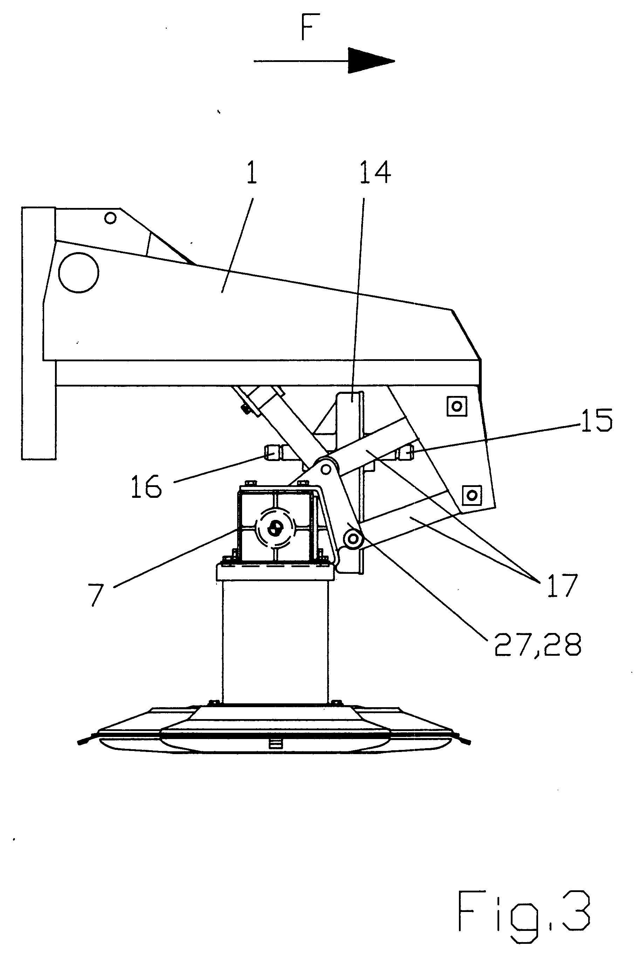

In Fig. 3 ist der Front-Trommelmäher in einer Seitenansicht dargestellt. Der Träger (7) mit den Modulen (10,11,12,13) kann zum Maschinenrahmen (1) über Verbindungsteile (27,28) und Parallelogramme (17) zum Transport hydraulisch angehoben werden.

Das Antriebsgetriebe (14) hat eine vordere Zapfwelle (15) und eine hintere Zapfwelle (16). Die hintere Zapfwelle (16) verbindet den Trommelmäher mit der Frontzapfwelle des Traktors über eine nicht dargestellte Gelenkwelle. Die vordere Zapfwelle (15) kann zum Antrieb von Kombinationsgeräten verwendet werden.

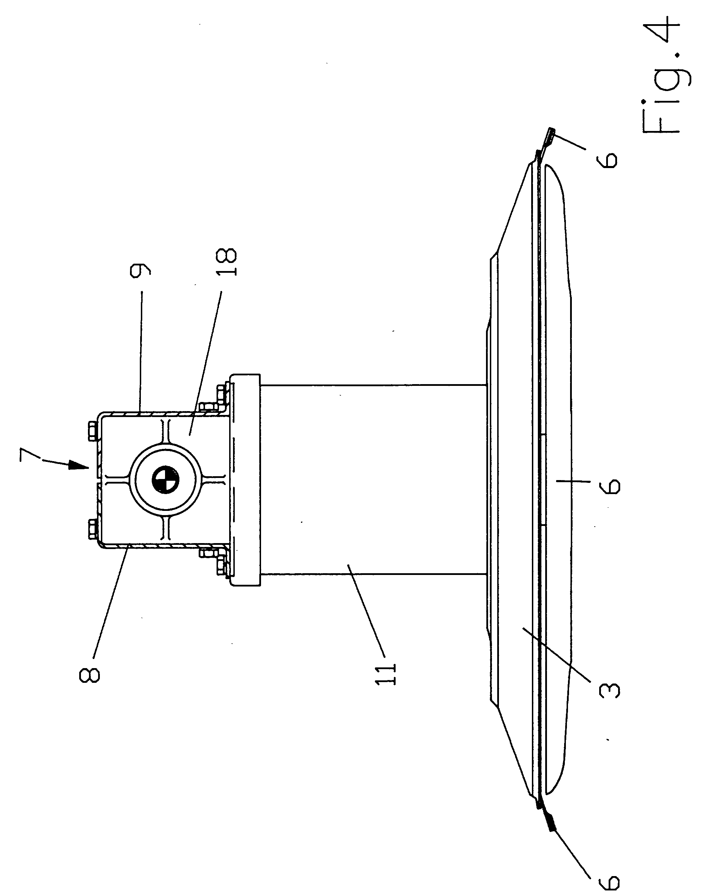

Fig. 4 zeigt eine vergrößerte Schnittdarstellung gemäß Schnitt A-A in Fig. 1, mit den Z-förmigen Trägerteilen (8,9).

## Patentansprüche

1. Kreiselmäher, insbesondere Trommelmäher, mit mindestens zwei um etwa vertikale Drehachsen von einer Traktorzapfwelle über Winkelgetriebe antreibbaren nebeneinander in Abstand zueinander angeordneten Mähtrommeln (2,3,4,5), deren Mähtrommeln (2,3,4,5) mit ihrem Winkelgetriebe eine Baueinheit d.h. Module (10,11,12,13) bilden und die Winkelgetriebe von zwei U-Trägern, mit diesen verschraubt, einen Träger (7) bilden, dadurch gekennzeichnet, daß der Träger (7) im Wesentlichen aus zwei parallel im Abstand zueinander, im Querschnitt Z-förmig geformten Trägerteilen (8,9) besteht, und daß die oberen Schenkel der Z-förmigen Trägerteile (8,9) im oberen Bereich einander in geringem Abstand gegenüberliegend die Getriebe (18) übergreifen, so daß die Trägerteile (8,9) neben ihrer verbindenden Funktion gleichzeitig einen Schutz gegen Berührung der bewegten Antriebsteile zwischen den Getrieben (18) der Module (10,11,12,13) umfassen.

2. Kreiselmäher, insbesondere Trommelmäher, nach einem der Ansprüche 1 , dadurch gekennzeichnet, daß der gegenseitige Abstand der die Trägerteile (8,9) verbindenden Modulteile (20,21,22,23) in horizontaler Richtung veränderbar ist.

3. Kreiselmäher, insbesondere Trommelmäher, nach einem der Ansprüche 1 bis 2, dadurch gekennzeichnet, daß die Modulteile (20,21,22,23) so gestaltet sind, daß sie in unterschiedlichen Stellungen mit dem Trägerteil (8,9) verbindbar sind.

4. Kreiselmäher, insbesondere Trommelmäher, nach Anspruch 1 bis 3, dadurch gekennzeichnet, daß die Modulteile (20,21,22,23) um 180° gedreht befestigbar sind.

5. Kreiselmäher, insbesondere Trommelmäher, nach Anspruch 1 bis 4, dadurch gekennzeichnet, daß die Getriebe (18) der Module (10,11,12,13) zwei parallel zu den Trägerteilen (8,9) ausgerichtete einander entgegengesetzt angeordnete Antriebsstummel (31) aufweisen.

6. Kreiselmäher, insbesondere Trommelmäher, nach einem der Ansprüche 1 bis 5, dadurch gekennzeichnet, daß die Getriebe (18) der einzelnen Module (10,11,12,13) durch Gelenkwellen (26) verbunden sind, die zwischen den Trägerteilen (8,9) verlaufen.

7. Kreiselmäher, insbesondere Trommelmäher, nach einem der Ansprüche 1 bis 6, **dadurch gekennzeichnet**, daß die Trägerteile (8,9) im oberen Bereich einander in geringem Abstand gegenüberliegen.

## Claims

1. Rotary (drum) mower, especially disc mower, with at least two cutting drums (2,3,4,5) arranged around mainly vertical rotary axes driven from a tractor p.t.o. shaft via angular gear and next to each other at a spacing in relation to each other, whereby the cutting drums (2,3,4,5) with their angular gear form one assembly group, i. e. modules (10, 11,12,13), and the angular gears form a carrier beam (7) by way of two U-shaped beams bolted to it, **characterised in** that the carrier beam (7) mainly consists of two carrier beam sections (8, 9) arranged in parallel to each other and of a Z-shaped cross section, and that the upper legs of the Z-shaped carrier beam sections (8, 9), in the upper area, extend to the opposite side beyond the gears (18) with a small spacing to each other, so that the carrier beam sections (8, 9), in addition to their connecting function, simultaneously provide a contact protection for the moving drive components between the gearings (18) of the modules (10, 11,12,13).

2. Rotary mower, especially a drum mower, according to one of claims 1, **characterised in** that the spacing in relation to each other of the module elements (20, 21, 22, 23) connecting the carrier beam sections (8, 9) can be changed in horizontal direction.

3. Rotary mower, especially a drum mower, according to one of claims 1 and 2, **characterised in** that the module elements (20, 21, 22, 23) are designed such that they can be connected to the carrier beam section (8, 9) at different positions.

4. Rotary mower, especially a drum mower, according to one of claims 1 to 3, **characterised** in that the module elements (20, 21, 22, 23) can be attached turned through 180°.

5. Rotary mower, especially a drum mower, according to one of claims 1 to 4, **characterised in** that the gearings (18) of modules (10, 11, 12, 13) have two drive journals (31) arranged in parallel in relation to the carrier beam sections (8,9) and aligned opposite to each other.

6. Rotary mower, especially a drum mower, according to one of claims 1 to 5, **characterised in** that the gearings (18) of the individual modules (10, 11, 12, 13) re connected by articulated shafts (26) extending between the carrier beam sections (8,9).

7. Rotary mower, especially a drum mower, according to one of claims 1 to 6, **characterised in** that the carrier beam sections (8,9) are opposing each other with a small spacing in the upper area.

## Revendications

1. Faucheuse rotative, notamment faucheuse à tambours, comportant au moins deux tambours de fauchage (2,3,4,5) tournant autour d'axes de rotation sensiblement verticaux, juxtaposés à distance et entraînés par des transmissions d'angle à partir de la prise de force du tracteur, les tambours (2,3,4,5) formant avec leur transmissions d'angle un ensemble de construction, c'est-à-dire des modules (10,11,12,13), tandis que les transmissions d'angle sont vissées à deux poutres en U et forment avec celles-ci une poutre (7), caractérisée en ce que la poutre (7) est composée principalement de deux éléments de poutre (8,9) écartés, à section en forme de Z, et les branches supérieures des éléments de poutre (8,9) en forme de Z, chevauchent dans leur partie supérieure, à distance l'une de l'autre, les transmissions d'angle (18), de sorte que les éléments de poutre (8,9) assurent, à côté de leur fonction de liaison, en même temps celle de protection contre le contact des parties d'entraînement mobiles entre les transmissions d'angle (18) des modules (10,11,12,13).

2. Faucheuse rotative, notamment faucheuse à tambours, selon la revendication 1, caractérisée en ce que la distance réciproque des parties de modules (20,21,22,23) reliant les éléments de poutre (8,9), est variable dans la direction horizontale.

3. Faucheuse rotative, notamment faucheuse à tambours, selon l'une des revendications 1 et 2, caractérisée en ce que les parties de modules (20,21,22,23) sont réalisées pour être reliées dans des positions différentes avec les éléments de poutre (8,9).

4. Faucheuse rotative, notamment faucheuse à tambours, selon les revendications 1 à 3, caractérisée en ce que les parties de modules (20,21,22,23) se fixent, tournées à 180°.

5. Faucheuse rotative, notamment faucheuse à tambours, selon les revendications 1 à 4, caractérisée en ce que les transmissions d'angle (18) des modules (10,11,12,13) comportent deux tambours d'entraînement (31), alignés de manière opposée l'un par rapport à l'autre et parallèles aux éléments de poutre (8,9).

6. Faucheuse rotative, notamment faucheuse à tambours, selon les revendications 1 à 4, caractérisée en ce que les transmissions d'angle (18) des modules (10,11,12,13) sont reliées par des axes articulés (26) entre les éléments de poutre (8,9).

7. Faucheuse rotative, notamment faucheuse à tambours, selon les revendications 1 à 6, caractérisée en ce que les éléments de poutre (8,9) sont opposées l'un à l'autre à faible distance.
